(19) Europäisches Patentamt
European Patent Office
Office européen des brevets

(11) EP 0 575 807 B1

(12) EUROPÄISCHE PATENTSCHRIFT

(45) Veröffentlichungstag und Bekanntmachung des Hinweises auf die Patenterteilung:
**12.04.2000 Patentblatt 2000/15**

(51) Int. Cl.[7]: **C08G 65/48**, H01M 6/18, H01M 10/40

(21) Anmeldenummer: **93109140.9**

(22) Anmeldetag: **07.06.1993**

(54) **Sulphonierte Polyetherketonen**
Sulphonated polyetherketones
Polyéthercétones sulfonés

(84) Benannte Vertragsstaaten:
**BE DE FR GB IT NL**

(30) Priorität: **11.06.1992 DE 4219077**

(43) Veröffentlichungstag der Anmeldung:
**29.12.1993 Patentblatt 1993/52**

(73) Patentinhaber:
**Aventis Research & Technologies GmbH & Co. KG**
**65926 Frankfurt am Main (DE)**

(72) Erfinder:
- **Helmer-Metzmann, Freddy, Dr.**
  **D-6500 Mainz (DE)**
- **Osan, Frank, Dr.**
  **D-6233 Kelkheim/Ts. (DE)**

(56) Entgegenhaltungen:
**EP-A- 0 041 780**
**EP-A- 0 047 903**
**EP-A- 0 382 440**
**DE-A- 3 402 471**
**US-A- 2 861 116**

- **MACROMOLECULES Bd. 18, 1985, Seiten 86 - 93 BISHOP M.T. ET AL 'Solubility and properties of a poly(aryl ether ketone) in strong acids'**
- **PATENT ABSTRACTS OF JAPAN vol. 14, no. 288 (E-943)(4231) 21. Juni 1990 & JP-A-2 094 261 ( SAKOTA KAGAKU KAIHATSU KENKYUSHO K.K. ) 5. April 1990**
- **Journal of Polymer Science, Band 23, Nr.8, 1985, Seiten 2205-2223, M.I.Litter und C.S.Marvel**

Bemerkungen:
Die Akte enthält technische Angaben, die nach dem Eingang der Anmeldung eingereicht wurden und die nicht in dieser Patentschrift enthalten sind.

EP 0 575 807 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft Polymerelektrolyte, die aus einem sulfonierten aromatischen Polyetherketon bestehen, sowie Verfahren zur Herstellung dieser Polymerelektrolyte.

Sulfonierte Polyetherketone stellen Kationen-Ionenaustauscher dar. Sie sind nützlich als Membranmaterialien, z.B. zur Ultrafiltration, zur Entsalzung und Entfernung von Mikroorganismen, da sie in vielen Fällen auch in Gegenwart von Wasser mechanisch beständig sind.

Die Herstellung von sulfonierten Polyaryletherketonen wird beschrieben in EP-A-08895 und EP-A-041780. Gemäß EP-A-8895 wird das zu sulfonierende Polymer bei Raumtemperatur in Schwefelsäure von 98 Gew.-% suspendiert. Der Löseprozeß und die Sulfonierung laufen gleichzeitig ab, wobei allmählich eine sehr viskose Lösung erhalten wird. Diese Lösung wird entweder sich selbst überlassen oder bei gleicher Temperatur mit Schwefelsäure gleicher Konzentration verdünnt. Die Reaktion verläuft sehr langsam. Nach Angaben der Autoren waren erst nach 10 Wochen ca. 90 % der sulfonierbaren Phenylen-Einheiten sulfoniert. In den eingesetzten Etherketonen betrug das Zahlenverhältnis von Etherbrücken zu CO-Brücken etwa 2:1.

Nach dem Verfahren gemäß EP-A-41780 werden bei erhöhter Temperatur aromatische Polyetherketone, die Copolymere darstellen, sulfoniert. Nur ein Teil der Monomereinheiten (A) ist der Sulfonierung zugänglich, während Monomereinheiten (B) nicht sulfoniert werden. Durch das Verhältnis A/B läßt sich so der Sulfonierungsgrad steuern. Jedoch bleiben auch hier die Reaktionsbedingungen während des Löseprozesses und danach unverändert.

Entsprechende Homopolymere (A) würden unter den angegebenen Bedingungen zu hoch sulfoniert sein und damit zu wasserlöslichen Verbindungen führen. Da hier die Sulfonierung bereits während des Auflöseprozesses des Polymeren stattfindet, ist es schwierig, den Sulfonierungsgrad zu kontrollieren und niedrig sulfonierte Produkte zu erhalten.

Da bei den beschriebenen Verfahren die Reaktionsbedingungen sich während der Reaktionszeit praktisch nicht verändern, wird ein erheblicher Teil der Sulfonsäuregruppen bereits während des Löseprozesses eingeführt. Der Nachteil dieser Sulfonierungsverfahren besteht darin, daß unter milden Bedingungen die Reaktion sehr langsam verläuft und unter drastischen Bedingungen sulfonierte Produkte nur schlecht rein zu erhalten sind. Die Verwendung von konzentrierter Schwefelsäure als Sulfonierungsreagenz und als Lösungsmittel hat den Nachteil, daß während der Behandlung der Polyetherketone Zersetzungsreaktionen und/oder Vernetzungsreaktionen eintreten (vgl. EP 08 895).

Eine Kontrolle des Sulfonierungsgrades der Polyetherketone während des Prozesses ist sehr wichtig. Die Isolierung der Produkte aus dem wäßrigen Aufarbeitungsmilieu wird mit zunehmendem Sulfonierungsgrad immer schwieriger. Je nach Polymerstruktur bilden die sulfonierten Produkte ab einem bestimmten Sulfonierungsgrad in Wasser hochgequollene Gele oder emulsionsartige Niederschläge, die z.B. zur Herstellung von Membranen ungeeignet sind.

Marvel et al. berichten (Journal of Polymer Science, Polymer Chem. Edition, vol. 23, 2205-2223, (1985)) über die Sulfonierung von Polyetherketonen unterschiedlicher Ether/Keton-Sequenzen unter Verwendung von Chlorsulfonsäure oder einem $SO_3$/Triethylphosphat-Komplex. Mit dem letztgenannten System wurde dabei ein hoher Grad an Vernetzung sowie Zersetzung der Polymerhauptkette beobachtet. Dagegen war die Chlorsulfonsäure-Route erfolgreicher, obwohl auch hier als wesentliche Nebenreaktion die Zersetzung der Polymerhauptkette eintritt. In Untersuchungen von Bishop et. al., Macromolecules, 18, 86-93 (1985), wurden bei der Sulfonierung von Polyetherketonen mit Chlorsulfonsäure ebenfalls Vernetzungsreaktionen gefunden.

Es bestand daher die Aufgabe, ein Verfahren bereitzustellen, das eine schnelle und schonende Sulfonierung von aromatischen Polyetherketonen gestattet und ferner die Aufgabe, mittels dieses Verfahren neue sulfonierte Polyetherketone zu gewinnen.

Es wurde nunmehr ein Verfahren gefunden, nach dem sich aromatische Polyetherketone der allgemeinen Formel II

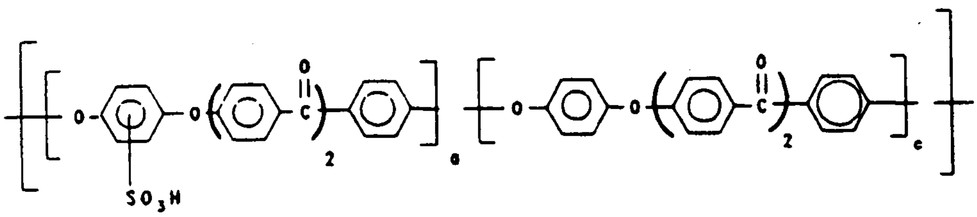

(II),

in der a eine Zahl von 0,2 bis 1, c = eine Zahl von 0 bis 0,8 bedeutet und die Summe a + c = 1 beträgt, solfonieren lassen. Das Verfahren ist dadurch gekennzeichnet, daß man das aromatische Polyetherketon in Schwefelsäure von 94 bis 97 Gew.-% löst, man die erhaltene Lösung mit einem sulfonierenden Agens versetzt, bis die Schwefelsäurekonzentration 98 bis 99,5 Gew.-% beträgt und man den Reaktionsansatz aufarbeitet, sobald der gewünschte Sulfonierungsgrad erreicht ist.

Die in Formel II angegebenen aromatischen Polyetherketone sind leicht zugänglich. Die für die Sulfonierung eingesetzten polymeren aromatischen Etherketone lassen sich prinzipiell durch eine elektrophile Polykondensation nach Friedel-Crafts aufbauen, wobei ein entsprechendes aromatisches Bissäuredihalogenid mit einem aromatischen Ether umgesetzt wird. Diese Möglichkeit ist z.B. in US-3 065 205, GB-971 227, US-3 441 538, GB-1 387 303, WO 84-03 891 und in dem Aufsatz von Iwakura, Y., Uno, K. und Tahiguchi, T.J., Polym. Sci., Pat. A-1, 6, 3345 (1968), dargestellt.

Daneben kann man die Etherketone durch nucleophile aromatische Substitution gewinnen. Hierzu wird ein entsprechendes aromatisches Bisdiol mit einem aromatischen Bishalogenketon umgesetzt, wie es z.B. in:
R.A., Clendinning, A.G. Farnham, W.F. Hall, R.N. Johnson and C.N. Merriam, J. Polym. Sci. A1, 5, 2375, (1967), GB-1 177 183, GB-1 141 421, EP-0 001 879, US 4 108 837, US 4 175 175, T.E. Attwood, A.B. Newton, J.B. Rose, Br. Polym. Journ., 4, 391, (1972); T.E. Attwood, P.C. Dawson, J.L. Freemann, L.R.J. Hoy, J.B. Rose, P.A. Staniland, Polymer, 22, 1096, (1981) beschrieben wird.

Vorzugsweise werden die aromatischen Polyetherketone in Schwefelsäure unter schonenden Bedingungen gelöst, d.h. unter Bedingungen, bei denen eine Sulfonierung weitgehend unterdrückt wird, bzw. es noch nicht zu einer Sulfonierung kommt. Angaben über den Sulfonierungsgrad bei der Sulfonierung des Homopolymeren der allgemeinen Formel IV bei unterschiedlichen Lösebedingungen finden sich in X. Jin, M.T. Bishop, T.S. Ellis und F.E. Karasz, British Polymer Journal, Vol. 17, (1985), p. 4-10.
Nach Angaben der Autoren wurde in Schwefelsäure von 94 % nach 3,75 Stunden bei 25°C ein Sulfonierungsgrad von 4 % gefunden. Nach eigenen Untersuchungen bei 25°C wird in Schwefelsäure von 95 % nach 30 Stunden ein Sulfonierungsgrad von 25 % und in Schwefelsäure von 96,2 % nach 24 Stunden ein Sulfonierungsgrad von 32 % beobachtet. Bevorzugt sind für diese Polymere Lösebedingungen, die zu einem Sulfonierungsgrad von maximal 35 % führen.

Für das Homopolymer der allgemeinen Formel VI wird nach eigenen Untersuchungen bei 25°C in Schwefelsäure von 95 % oder 96,2 % nach 5 Stunden ein Sulfonierungsgrad von 14 % beobachtet. Die Konzentration der Schwefelsäure ist in diesem Fall also von geringerer Bedeutung. Bevorzugt sind für dieses Polymer Lösebedingungen, die zu einem Sulfonierungsgrad von maximal 15 % führen.

Vorzugsweise bestehen sämtliche zweiwertige aromatische Reste Ar- des zu sulfonierenden Polymers aus Phenylen, vorzugsweise aus 1,4-Phenylen. Als sulfonierendes Agenz, das zur Erhöhung der Schwefelsäure-Konzentration und zur Sulfonierung dient, werden vorzugsweise rauchende Schwefelsäure, Chlorsulfonsäure und Schwefeltrioxid eingesetzt.

Vorzugsweise beträgt die Konzentration der zum Auflösen verwendeten Schwefelsäure 96 bis 96,5 %. Die Lösetemperatur ist abhängig von dem Zahlenverhältnis Ether-Brücken/Carbonyl-Brücken. Mit steigendem Anteil an Ethergruppen relativ zu den Carbonylgruppen nimmt die Reaktivität der Polyetherketon-Hauptkette für eine elektrophile Substitution (z.B. Sulfonierung) zu. Die Anzahl der einführbaren Sulfonsäuregruppen ist von der Anzahl der über Sauerstoffe verbrückten aromatischer Ringe abhängig. Nur O-Phenyl-O-Einheiten werden unter den angegebenen Bedingungen sulfoniert, während O-Phenyl-CO-Gruppen unsulfoniert bleiben. Im allgemeinen liegt die Temperatur beim Auflösen des Polymers zwischen 10 und 60°C, insbesondere zwischen 20 und 60°C, vorzugsweise zwischen 30 und 50°C. Während dieses Lösungsprozesses ist eine Sulfonierung der Hauptkette weitgehend unterdrückt. Eigene NMR-Untersuchungen haben gezeigt, daß während der Sulfonierung kein Abbau eintritt.

Nach vollständigem Lösen der Probe wird die Konzentration der Schwefelsäure, z.B. durch Zugabe von Oleum erhöht, bis die $H_2SO_4$-Konzentration 98 bis 99,9, insbesondere 98 bis 99,5, vorzugsweise 98,2 bis 99,5 Gew.-% beträgt. Die Reaktionstemperatur bei der eigentlichen Sulfonierung kann höher liegen als beim Löseprozeß. Im allgemeinen sulfoniert man bei 10 bis 100°C, insbesondere 30 bis 90°C, vorzugsweise bei 30 bis 80°C. Sowohl eine Temperaturerhöhung wie auch eine Verlängerung der Reaktionszeit bewirken eine Erhöhung des Sulfonierungsgrads des Polymers. Typische Reaktionszeiten liegen zwischen 0,5 und 10 Stunden, insbesondere zwischen 1 bis 8 Stunden, vorzugsweise zwischen 1,5 bis 3 Stunden. Reaktionszeiten über 10 Stunden erhöhen den Sulfonierungsgrad nur noch unwesentlich. Eine Erhöhung der Temperatur der Lösung auf mindestens 50°C nach Zugabe des sulfonierenden Agens beschleunigt die Sulfonierung erheblich.

Bevorzugt werden Homopolymere der allgemeinen Formeln V oder VI sulfoniert. Nach einer weiteren Ausgestaltung der Erfindung wird das beschriebene Verfahren eingesetzt zur Sulfonierung eines aromatischen Polyetherketons, das ein Copolymer darstellt, und aus mindestens 2 unterschiedlichen Einheiten der allgemeinen Formel V und VI

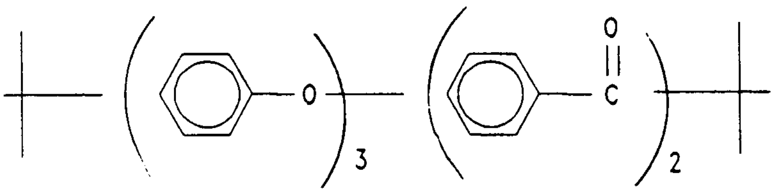

(V)

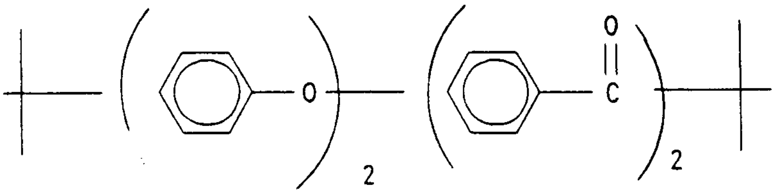

(VI)

aufgebaut ist.

Eine weitere vorzugsweise Ausgestaltung des erfindungsgemäßen Verfahrens besteht darin, daß man ein Polyetherketon einsetzt, das aus Einheiten der allgemeinen Formel V oder VI und zusätzlich aus nicht sulfonierbaren Einheiten aufgebaut ist. Die Sulfonierung von Copolymeren aus Monomer-Einheiten der allgemeinen Formel IV und nichtsulfonierbaren Etherketon-Einheiten wird in EP-A-41780 und EP 08895 beschrieben.

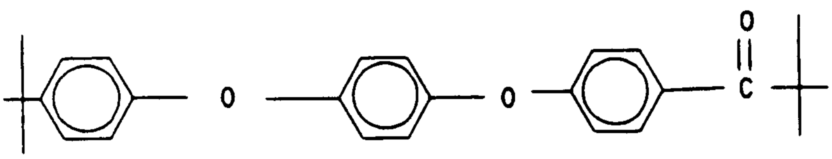

(IV)

Bei der vollständigen Sulfonierung eines Homopolymeren der allgemeinen Formel IV wurde unter den gleichen Bedingungen ein vollkommen wasserlösliches Produkt mit sehr starker Quellbarkeit in Wasser bei Raumtemperatur erhalten werden, dessen Isolierung sehr schwierig ist. Diese Eigenschaften sind z. B. für eine Anwendung der Polysulfonsäuren als hydrophile Ionenaustauschermembrane in Elektrolysezellen unerwünscht, da eine starke Quellung zum Verlust der mechanischen Beständigkeit der Membran führt. Andererseits ist aber gerade für eine hohe Ionenaustauscherkapazität ein hoher Sulfonierungsgrad erforderlich.

Auch bei diesem Verfahren wird das Polyetherketon in Schwefelsäure von 94 bis 97 Gew.-% gelöst. Die erhaltene Lösung wird mit einem sulfonierenden, Agens versetzt bis die Schwefelsäurekonzentration 98 bis 99,5 Gew.-% beträgt. Der Reaktionsansatz wird aufgearbeitet, sobald der gewünschte Sulfonierungsgrad erreicht ist.

Die nicht sulfonierbaren Einheiten weisen vorzugsweise die Formel VII auf

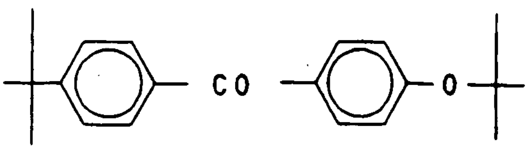

(VII)

und leiten sich dann formal von 4-Oxy-Benzophenon ab oder besitzen die allgemeine Formel VIII

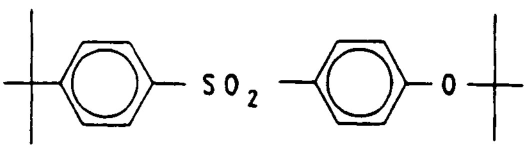

(VIII)

und leiten sich dann von 4-Oxy-Benzosulfon ab.

Zum Lösen des Polymeren der allgemeinen Formel V in Schwefelsäure von 94 bis 96 Gew.-% arbeitet man vorzugsweise bei 30°C. Das Homopolymer der Formel VI wird vorzugsweise in Schwefelsäure von 95 bis 96,5 Gew.-% bei 25 bis 50°C gelöst und anschließend bei Temperaturen von 60 bis 90°C sulfoniert.

Die nach dem erfindungsgemäßen Verfahren gewonnenen aromatischen Polyaryletherketone sind teilweise neu.

Bei der Sulfonierung des Homopolymers der allgemeinen Formel VI fällt die Sulfonsäure der allgemeinen Formel II

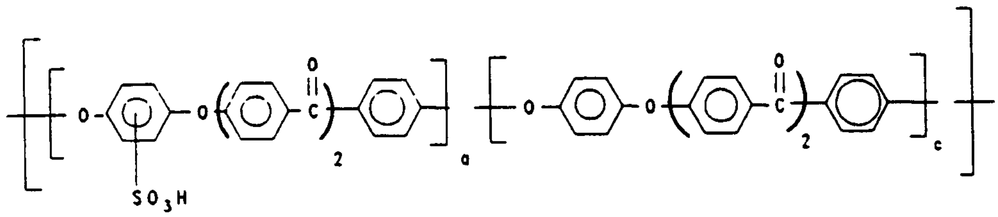

(II)

an, in der a eine Zahl von 0,2 bis 1, c = eine Zahl von 0 bis 0,8 bedeutet und die Summe $a + c = 1$ beträgt.

Bei der Sulfonierung des Homopolymers der allgemeinen Formel V entsteht die Sulfonsäure der allgemeinen Formel III

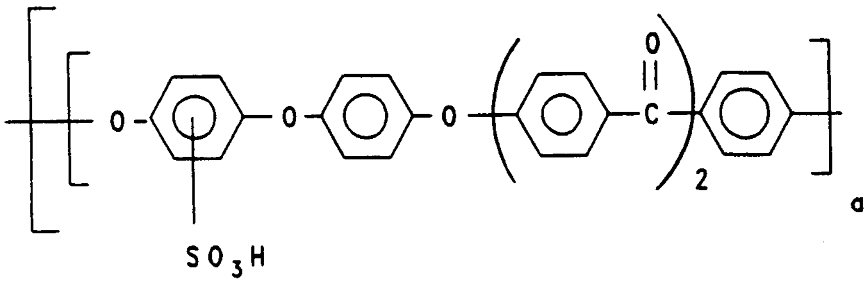

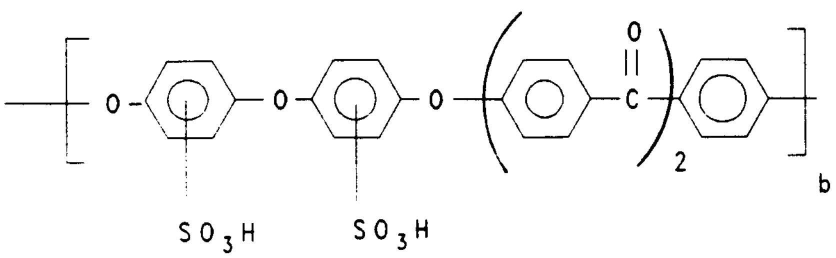

(III)

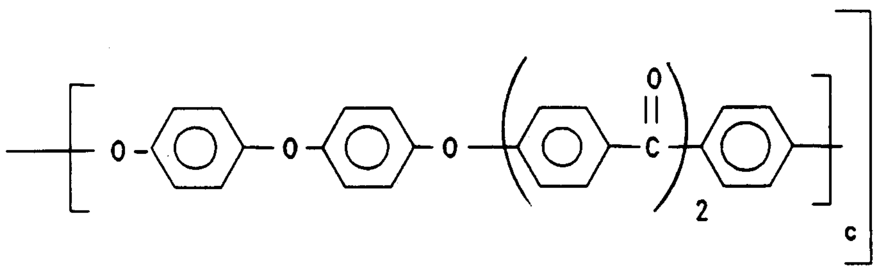

in der a eine Zahl von 0 bis 1, b eine Zahl von 0 bis 1, c eine Zahl von 0 bis 0,5, bedeutet und die Summe $a + b + c = 1$

beträgt.

Bei der Sulfonierung werden zuerst Monosubstitutionsprodukte (b = 0) erhalten, in denen a zwischen 0,5 und 1 und c zwischen 0 und 0,5 liegt. Dann erreicht a ein Maximum (etwa 1) wobei b gering bleibt und c auf geringe Werte zurückgeht. Schließlich kommt es zur Disulfonierung und der Wert von b steigt auf Kosten von a an.

Mit steigendem Ether/Ketonverhältnis erhöht sich die Masse der Wiederholungseinheit. Dadurch wird der Anteil von $SO_3H^-$ am Gesamtgewicht für die Polymere IV, V und VI bei gleichem Sulfonierungsgrad unterschiedlich. Beispielsweise besitzt ein sulfoniertes Polyetherketon der Formel IV mit einem Sulfonierungsgrad von 40 % ein $SO_3H$-Äquivalent von 1,25 mmol/g, während sulfoniertes Polyetherketon der Formel VI bei einem Sulfonierungsgrad von 40 % nur ein $SO_3H$-Äquivalent von 0,94 mmol/g aufweist.

Obwohl der Sulfonierungsgrad (Anteil der sulfonierten O-Phenyl-O-Einheiten) in beiden Fällen gleich ist, sind die physikalischen und mechanischen Eigenschaften unterschiedlich. Durch Variation des Ketonanteils im Polymer erreicht man neben einer geringeren Reaktivität auch eine gezieltere Einstellung eines gewünschten Eigenschaftsprofils. Das Polyetherketon der Formel VI läßt sich sehr hoch sulfonieren, ohne jedoch wasserlöslich zu werden. Bei einem Sulfonierungsgrad von 85 % wird das Polymer der Formel IV vollständig wasserlöslich, während ein sulfoniertes Polymer der Formel VI mit 85 % $SO_3H$-Gruppen noch handhabbar und aus Wasser isolierbar ist.

Die Sulfonsäuren der Formel II, die sich von Homopolymerisat der allgemeinen Formel VI ableiten, sind oberhalb eines Sulfonierungsgrades von 40 % löslich in DMF, N-Methylpyrrolidon, Dimethylsulfoxid und konz. Schwefelsäure. Sie sind jedoch unlöslich in 25 %iger Kalilauge, Chloroform und Tetrahydrofuran. Sowohl die eingesetzten Etherketone wie die erhaltenen Sulfonsäuren besitzen Molgewichte von mindestens 30 000.

Die Erfindung wird durch die Beispiele näher erläutert.

Beispiele:

In einer Vierhals-Rührapparatur mit Tropftrichter und Ölbad wurde 96 %ige konz. Schwefelsäure vorgelegt und unterschiedliche aromatische Polyetherketone gelöst. Danach wurde die Säurekonzentration durch Titration mit Oleum (Gehalt 20 % $SO_3$) auf 98,5 bis 99,5 Gew.-% $H_2SO_4$ eingestellt. Die Sulfonierung wird durch eine sich anschließende Temperaturerhöhung beschleunigt. Die Endtemperatur hängt vom jeweiligen Polymer ab. Die Versuche der Tabelle 1 wurden mit einem Homopolymer der allgemeinen Formel IV (nicht erfindungsgemäß) durchgeführt. Die Versuche der Tabelle 2 wurden mit einem Homopolymer der allgemeinen Formel V durchgeführt. Die Versuche der Tabelle 3 wurden mit einem Homopolymer der allgemeinen Formel VI durchgeführt.

In den Tabellen wurden folgende Abkürzungen benutzt:

<u>Legende</u>

| | |
|---|---|
| LT | = Lösetemperatur |
| RT | = Reaktionstemperatur |
| RZ | = Reaktionszeit |
| Ausb. | = Ausbeute |
| inh. V. | = inhärente Viskosität in conc. $H_2SO_4$ bei 25°C (0,1 %) gemessen |
| Sulfgrad | = Sulfonierungsgrad, bestimmt durch den Schwefelgehalt aus der Elementaranalyse (Anteil der sulfonierten O-Phenylen-O-Einheiten) |

Tabelle 1

| | LT (°C) | Säure Endkonz (%) | RT (°C) | RZ (h) | Ausb. (%) | inh. V (dl/g) | Sulfgrad (%) |
|---|---|---|---|---|---|---|---|
| I | 25 | 98.50 | 25 | 1.00 | > 90 | -- | 40 |
| II | 25 | 98.50 | 45-50 | 1.25 | > 90 | -- | 63 |
| III | 25 | 98.50 | 45-50 | 1.50 | > 90 | 0.73 | 66 |
| IV | 40 | 98.50 | 60 | 3.00 | > 90 | 0.64 | 82 |
| V | 25 | 98.50 | 50 | 1.50 | > 90 | 0.71 | 77 |
| VI | 25 | 98.50 | 50 | 1.50 | > 90 | 0.71 | 76 |

Tabelle 2

| | LT (°C) | Säure Endkonz (%) | RT (°C) | RZ (h) | Ausb. (%) | inh. V (dl/g) | Sulfgrad (%) |
|---|---|---|---|---|---|---|---|
| I | 30 | 98.50 | 30-35 | 1.25 | > 90 | 0.77 | 50 |
| II | 30 | 98.50 | 25-30 | 6.00 | > 90 | 0.74 | 60 |
| III | 30 | 98.50 | 50 | 1.00 | > 90 | 0.76 | 46 |
| IV | 30 | 98.20 | 50 | 4.00 | > 90 | 0.67 | 69 |

Tabelle 3

| | LT (°C) | Säure Endkonz (%) | RT (°C) | RZ (h) | Ausb. (%) | inh. V (dl/g) | Sulfgrad (%) |
|---|---|---|---|---|---|---|---|
| I | 45 | 98.30 | 60 | 1.00 | > 90 | 0.80 | 21 |
| II | 45 | 98.30 | 70 | 0.50 | > 90 | 0.80 | 31 |
| III | 45 | 98.30 | 80 | 0.50 | > 90 | 0.71 | 52 |
| IV | 45 | 98.30 | 80 | 1.50 | > 90 | 0.67 | 72 |
| V | 45 | 98.50 | 60 | 4.00 | > 90 | 0.80 | 28 |
| VI | 45 | 99.10 | 80 | 4.00 | > 90 | 0.60 | 81 |
| VII | 45 | 99.95 | 60 | 4.00 | > 90 | 0.69 | 82 |
| VIII | 45 | 99.95 | 80 | 6.00 | > 90 | 0.57 | 75 |
| IX | 45 | 98.40 | 80 | 3.00 | > 90 | 0.70 | 91 |
| X | 45 | 99.10 | 60 | 1.00 | > 90 | 0.62 | 76 |
| XI | 45 | 99.95 | 60 | 0.83 | > 90 | 0.70 | 57 |

**Patentansprüche**

**1.** Polymerelektrolyt der allgemeinen Formel II

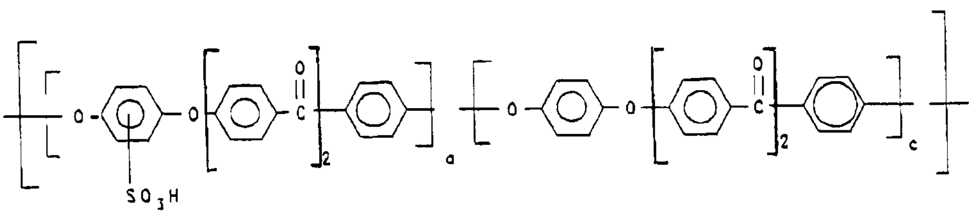

(II)

wobei

a = 0.2 - 1,
c = 0 - 0.8 bedeutet und
a + c = 1 ist.

**2.** Polymerelektrolyt der allgemeinen Formel III

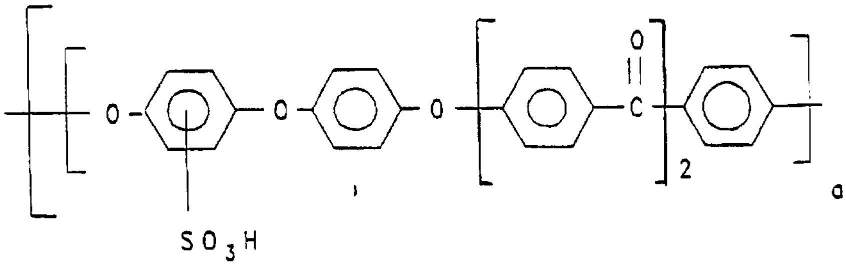

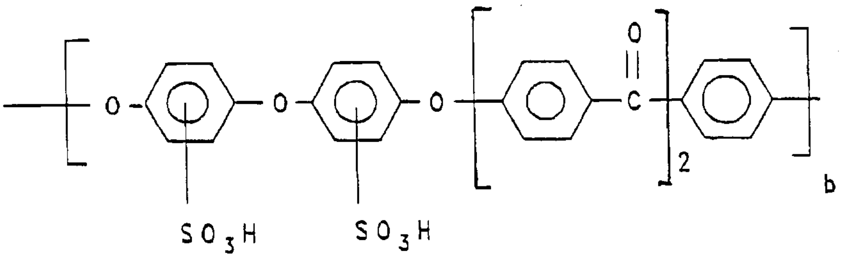

(III)

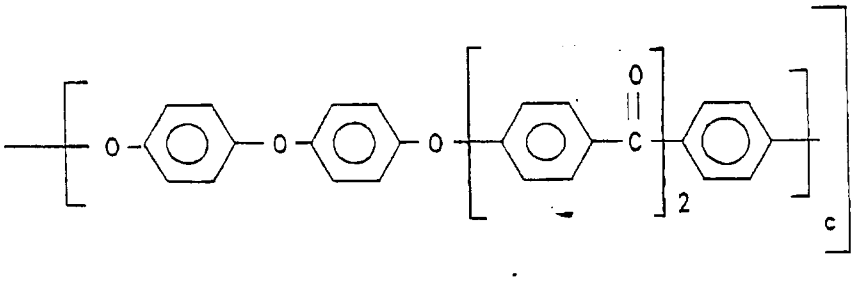

wobei

a = 0 - 1,
b = 0 - 1,
c = 0 - 0.5 und
a + b + c = 1 beträgt.

**3.** Verfahren zur Herstellung eines Polymerelektrolyten durch Sulfonierung eines aromatischen Polyetherketons der allgemeinen Formel II

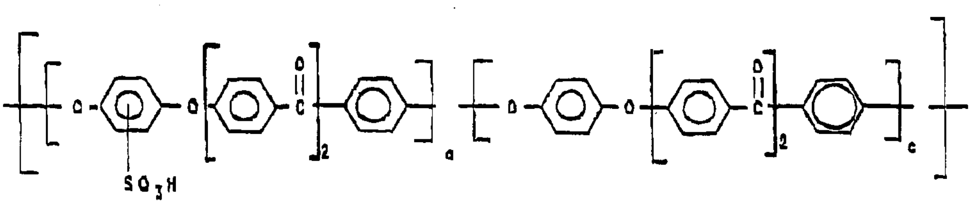

(II)

wobei

a = 0,2 - 1,
c = 0 - 0.8 bedeutet und
a + c = 1 ist,

dadurch gekennzeichnet, daß man das Polyetherketon in Schwefelsäure von 94 bis 97 Gew.-% löst und man die erhaltene Lösung mit einem sulfonierenden Agens versetzt, bis die Schwefelsäure-Konzentration 98 bis 99,9 Gew.-% beträgt und man den Reaktionsansatz aufarbeitet, sobald der gewünschte Sulfonierungsgrad erreicht ist.

**4.** Verfahren nach Anspruch 3, dadurch gekennzeichnet, daß man ein aromatisches Polyetherketon einsetzt, das ein Copolymer darstellt, das aus mindestens zwei unterschiedlichen Einheiten der Formeln IV, V und VI

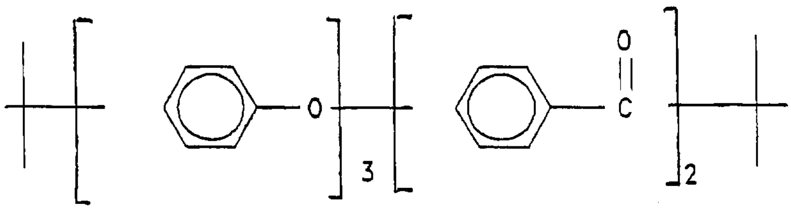

(V)

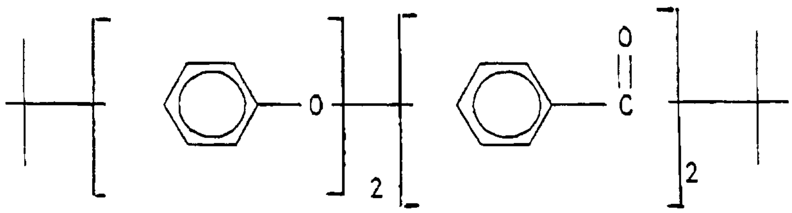

(VI)

aufgebaut ist.

**5.** Verfahren zur Herstellung eines Polymerelektrolyten durch Sulfonierung eines aromatischen Polyetherketons in Schwefelsäure, dadurch gekennzeichnet, daß man ein Polyetherketon einsetzt, das aus Einheiten der Formel

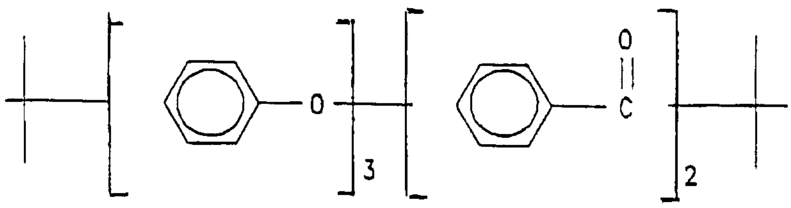

(V)

oder

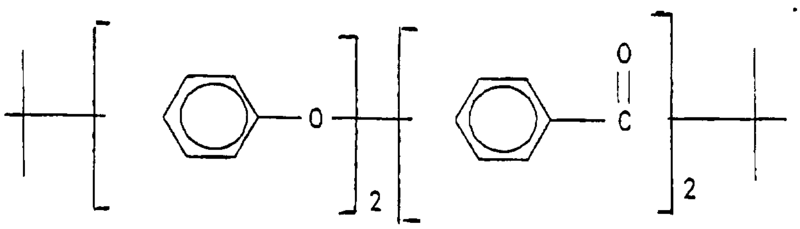

(VI)

sowie aus nicht sulfonierbaren Einheiten aufgebaut ist, man das Polyetherketon in Schwefelsäure von 94 bis 97 Gew.-% löst und man die erhaltene Lösung mit einem sulfonierenden Agens versetzt, bis die Schwefelsäure-Konzentration 98 bis 99,5 Gew.-% beträgt und man den Reaktionsansatz aufarbeitet, sobald der gewünschte Sulfonierungsgrad erreicht ist.

**6.** Verfahren nach Anspruch 5, dadurch gekennzeichnet, daß man ein aromatisches Polyetherketon einsetzt, dessen nicht sulfonierbare Einheiten die Formel VII

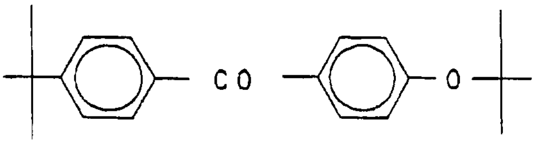

(VII)

aufweisen.

**7.** Verfahren nach Anspruch 5, dadurch gekennzeichnet, daß man ein aromatisches Polyetherketon einsetzt, dessen nicht sulfonierbare Einheiten die Formel VIII

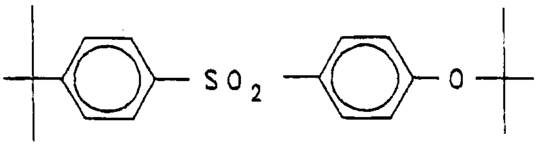

(VIII)

aufweisen.

**8.** Verfahren nach Anspruch 3 oder 5, dadurch gekennzeichnet, daß das sulfonierende Agens ausgewählt ist aus rauchender Schwefelsäure, Chlorsulfonsäure und Schwefeltrioxid.

**9.** Verfahren nach Anspruch 3 oder 5, dadurch gekennzeichnet, daß man nach Zugabe des sulfonierenden Agens die Temperatur der Lösung auf mindestens 50° C erhöht, um die Sulfonierung zu beschleunigen.

**10.** Verfahren gemäß Anspruch 3, dadurch gekennzeichnet, daß man ein Polymeres der allgemeinen Formel V,

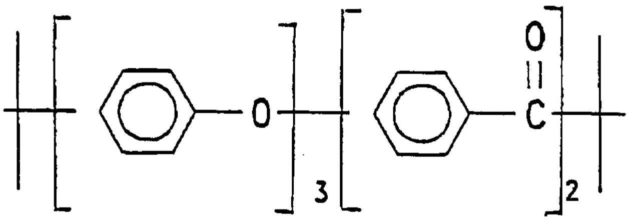

(V)

in Schwefelsäure von 94 bis 96 Gew.-% bei 25°C löst.

**11.** Verfahren gemäß Anspruch 3, dadurch gekennzeichnet, daß man ein Polymeres der allgemeinen Formel VI

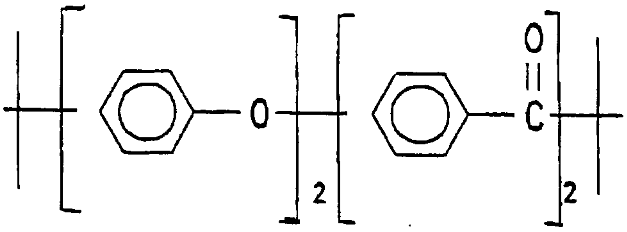

(VI)

in Schwefelsäure von 95 bis 96,5 Gew.-% bei Temperaturen von 25 bis 50°C löst und bei Temperaturen von 60 bis

90°C sulfoniert.

**Claims**

**1.** A polymer electrolyte of the formula II

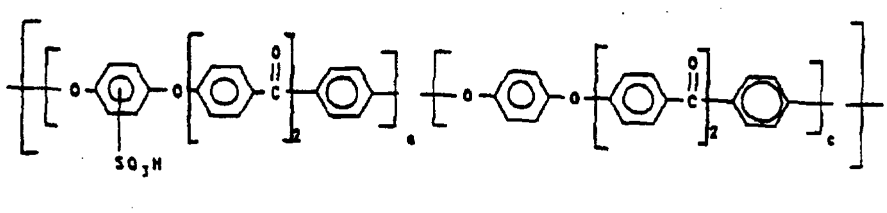

(II)

where

a is from 0.2 to 1,
c is from 0 to 0.8, and
a + c = 1 .

**2.** A polymer electrolyte of the formula III

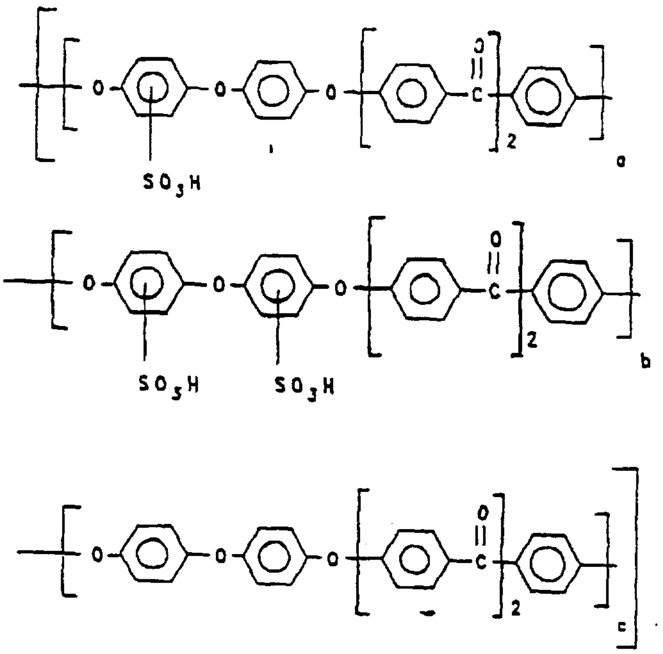

(III)

where

a is from 0 to 1,
b is from 0 to 1,
c is from 0 to 0.5, and
a + b + c = 1 .

**3.** A process for preparing a polymer electrolyte by sulfonating an aromatic polyether ketone of the formula II

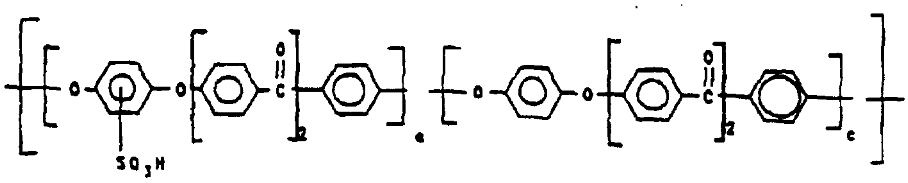

(I)

where

a is from 0.2 to 1,
c is from 0 to 0.8, and
a + c = 1 ,

which comprises dissolving the polyether ketone in 94 to 97 % by weight sulfuric acid and adding a sulfonating agent to the solution obtained until the sulfuric acid concentration is from 98 to 99.9 % by weight, and working up the reaction mixture as soon as the desired degree of sulfonation is reached.

**4.** The process as claimed in claim 3, wherein an aromatic polyether ketone is used that is a copolymer that is built up from at least two different units of the formulae V and VI

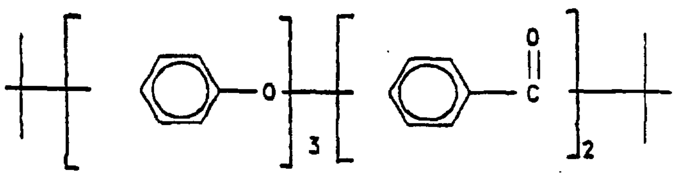

(V)

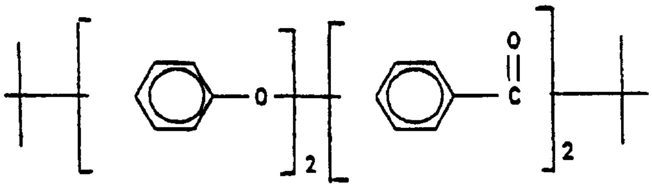

(VI) .

**5.** A process for preparing a polymer electrolyte by sulfonating an aromatic polyether ketone in sulfuric acid, which comprises using a polyether ketone that is built up from units of the formula

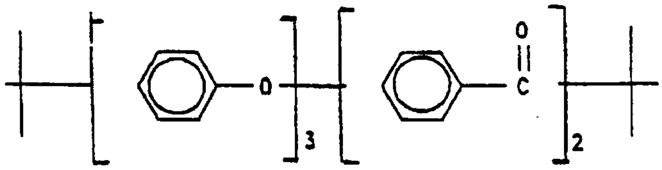

(V)

or

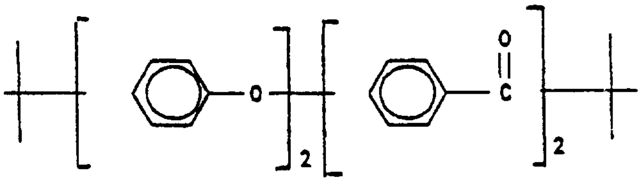

(VI)

and also from non-sulfonable units, dissolving the polyether ketone in 94 to 97 % by weight sulfuric acid and adding a sulfonating agent to the solution obtained until the sulfuric acid concentration is from 98 to 99.5 % by weight, and working up the reaction mixture as soon as the desired degree of sulfonation is reached.

**6.** The process as claimed in claim 5, wherein an aromatic polyether ketone is used whose non-sulfonable units have the formula VII

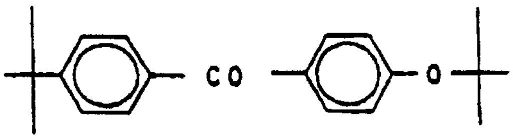

(VII).

**7.** The process as claimed in claim 5, wherein an aromatic polyether ketone is used whose non-sulfonable units have the formula VIII

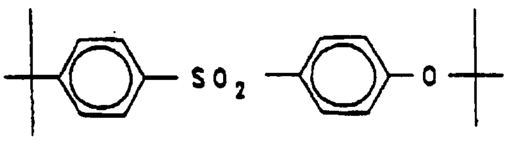

(VIII).

**8.** The process as claimed in claim 3 or 5, wherein the sulfonating agent is chosen from fuming sulfuric acid, chlorosulfonic acid and sulfur trioxide.

**9.** The process as claimed in claim 3 or 5, wherein the temperature of the solution is raised to at least 50°C after adding the sulfonating agent, in order to accelerate the sulfonation.

**10.** The process as claimed in claim 3, wherein a polymer of the formula V

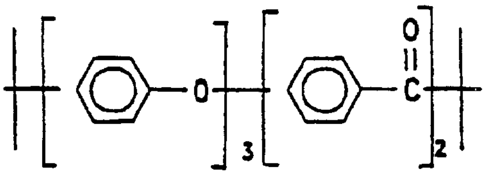

(V)

is dissolved in 94 to 96 % by weight sulfuric acid at 25°C.

**11.** The process as claimed in claim 3, wherein a polymer of the formula VI

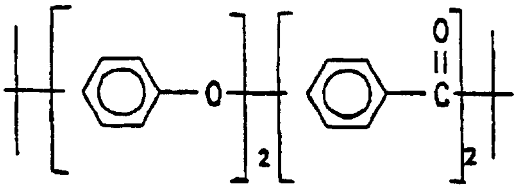

(VI)

is dissolved in 95 to 96.5 % by weight sulfuric acid at temperatures of from 25 to 50°C and is sulfonated at temperatures of from 60 to 90°C.

**Revendications**

**1.** Electrolyte polymère de formule générale II

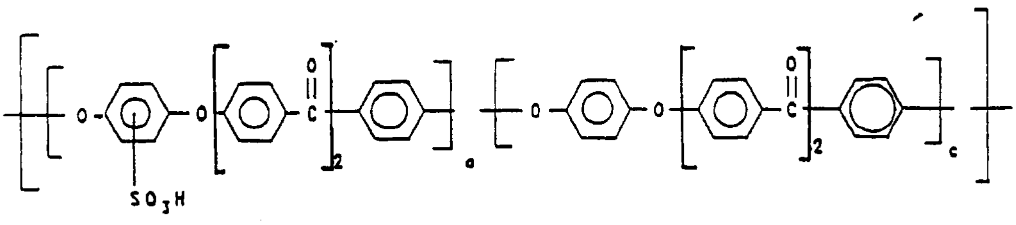

(II),

dans laquelle

a représente un nombre de 0,2 à 1,
c représente un nombre de 0 à 0,8, et

la somme a + c = 1 .

**2.** Electrolyte polymère de formule générale III

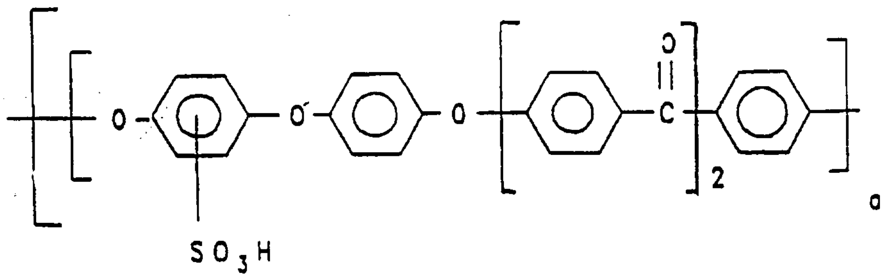

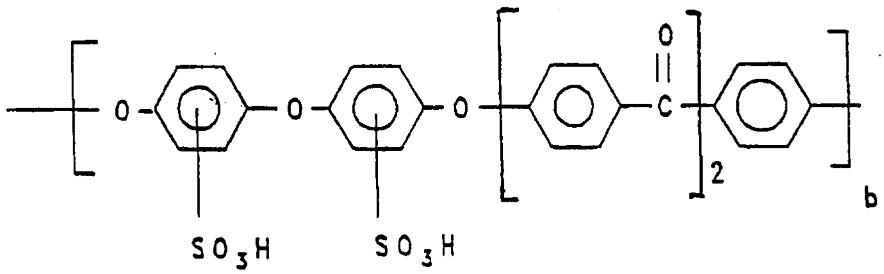

(III)

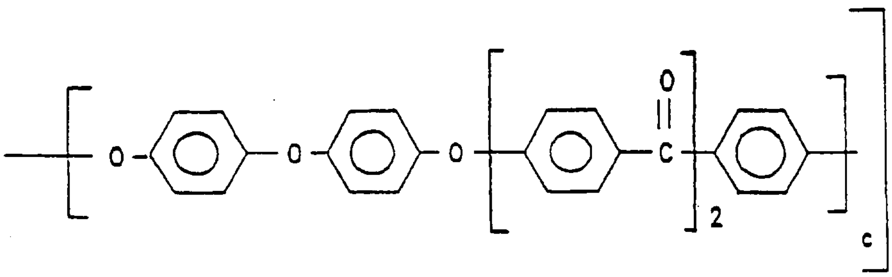

dans laquelle

a représente un nombre de 0 à 1,
b représente un nombre de 0 à 1,
c représente un nombre de 0 à 0,5, et

la somme de a + b + c s'élève à 1 .

3. Procédé pour la préparation d'un électrolyte polymère par sulfonation d'une polyéthercétone aromatique de formule générale II

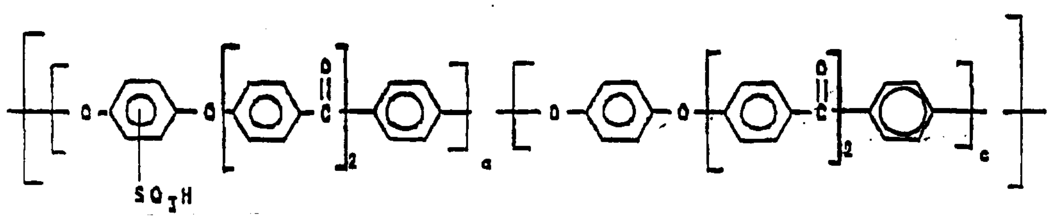

(II),

dans laquelle

a représente un nombre de 0,2 à 1,

c représente un nombre de 0 à 0,8, et

la somme a + c = 1 ,
caractérisé en ce que, l'on met en solution la polyéthercétone dans l'acide sulfurique de 94 à 97% en poids et en ce qu'on met à réagir la solution obtenue avec un agent de sulfonation, jusqu'à ce que la concentration en acide sulfurique se monte de 98 à 99,9% en poids et en ce qu'on traite le lot réactionnel, dès que le degré de sulfonation souhaité est atteint.

**4.** Procédé selon la revendication 3, caractérisé en ce que l'on utilise une polyéthercétone aromatique qui présente un copolymère qui est construit à partir d'au moins deux motifs différents des formules (V) et (VI)

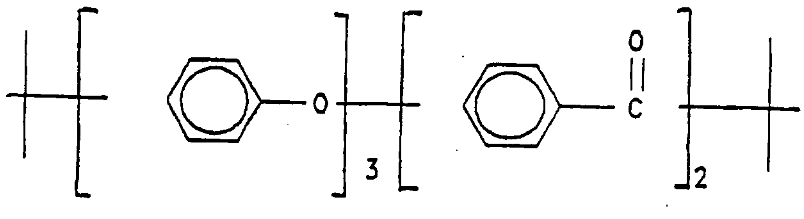

(V)

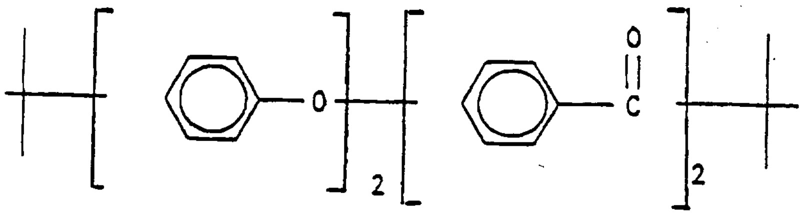

(VI)

**5.** Procédé pour la préparation d'un électrolyte polymère par sulfonation d'une polyéthercétone aromatique dans l'acide sulfurique, caractérisé en ce que, l'on utilise une polyéthercétone, qui est construite à partir de motifs de formule

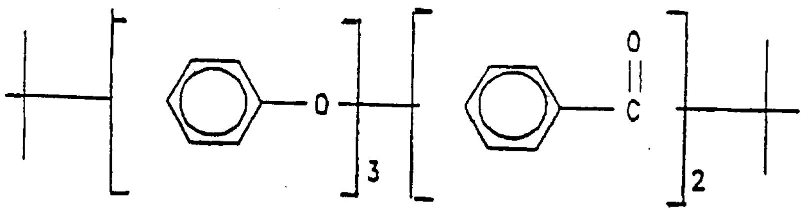

(V)

ou

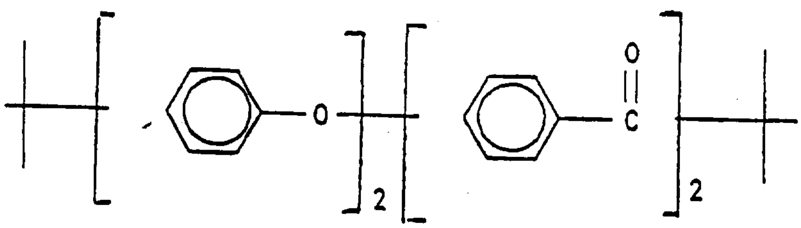

(VI)

ainsi que de motifs non sulfonables, en ce que l'on met en solution la polyéthercétone dans l'acide sulfurique de 94

à 97% en poids et en ce que l'on ajoute à la solution obtenue un agent de sulfonation, jusqu'à de que la concentration en acide sulfurique s'élève de 98 à 99,5% en poids et en ce que l'on traite le lot réactionnel dès que le degré de sulfonation souhaité est atteint.

6. Procédé selon la revendication 5, caractérisé en ce que, l'on utilise une polyéthercétone aromatique, dont les motifs non sulfonables présentent la formule VII

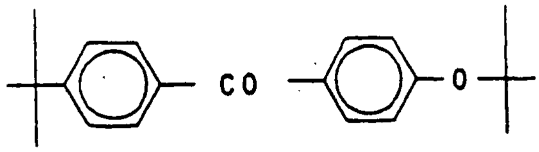

(VII)

7. Procédé selon la revendication 5, caractérisé en ce que, l'on utilise une polyéthercétone aromatique, dont les motifs non sulfonables présentent la formule VII

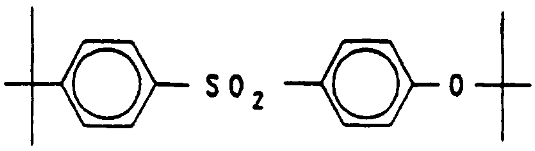

(VIII)

8. Procédé selon la revendication 3 ou 5, caractérisé en ce que, l'on choisit l'agent de sulfonation parmi l'acide sulfurique fumant, l'acide chlorosulfonique et le trioxyde de soufre.

9. Procédé selon la revendication 3 ou 5, caractérisé en ce qu'après addition de l'agent de sulfonation, on augmente la température de la solution à au moins 50°C pour accélérer la sulfonation.

10. Procédé selon la revendication 3, caractérisé en ce que, l'on dissout un polymère de formule générale V,

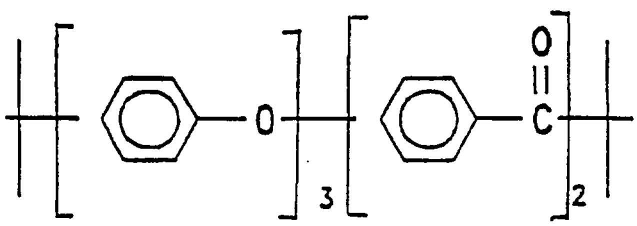

(V)

dans l'acide sulfurique de 94 à 96% en poids à 25°C.

11. Procédé selon la revendication 3, caractérisé en ce que, l'on dissout un polymère de formule générale VI,

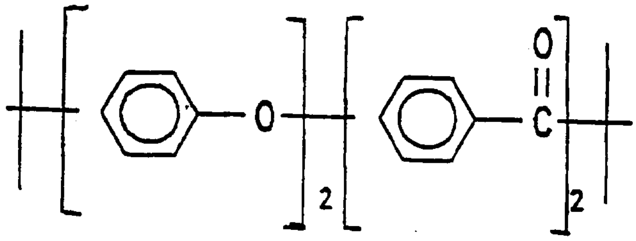

(VI)

dans l'acide sulfurique de 95 à 96,5% en poids à des températures de 25 à 50°C et en ce qu'on réalise la sulfonation à des températures de 60 à 90°C.